# EUROPEAN PATENT APPLICATION

(11) **EP 1 953 395 A1**
(43) Date of publication of application: **06.08.2008**
(21) Application number: 07101465.8
(22) Date of filing: 31.01.2007
(51) Int. Cl.: F16B 12/12

(54) **A method of assembling sandwich panels in an angular relationship, and structures made by the method**

(71) Applicant: IKD Produktion A/S, 4660 St. Heddinge (DK)
(72) Inventor: Jørgensen, Jesper Madvig, 4600, Køge (DK)
(74) Representative: Holme Patent A/S

(57) **Abstract**

A method which serves for assembling at least one first panel (1;20;21;22) and at least one second panel (2;29;30;40;46;53), in an angular relationship, comprises providing at least one protruding guide reglet (3; 23;24;33;34;45;51) on the at least first panel (1;20;21;22), providing a guide groove (12;13;31;32;35;36;44;50) in the at least second panel (2;29;30;40;46;53), said guide groove (12;13;31;32;35;36;44;50) is designed to firmly accommodate the at least one protruding guide reglet (3; 23;24;33;34;45;51), and slidingly engaging the guide groove (12;13;31;32;35;36;44;50) and the guide reglet (3; 23;24;33;34;45;51) to provide a strong joint of the at least first panel (1;20;21;22) and the at least second panel (2;29;30;40;46;53) wherein the panels are provided as sandwich panels having a lightweight core (6).

## Description

The present invention relates to a method of assembling at least one first panel and at least one second panel, in an angular relationship, of the kind comprising securing at least one protruding guide reglet to the at least one first panel, providing a guide groove in the at least one second panel, said guide groove is designed to firmly accommodate the at least one protruding guide reglet, and slidingly engaging the guide groove and the guide reglet to provide a strong joint of the at least one first panel and the at least one second panel.

US patent no. 5,803,561 discloses the manufacture of a cupboard of joined thin, solid panels. Dovetailed grooves are milled out in the planar face of one or more panels, which are to be joined with other panels, which are provided with protruding, corresponding dovetailed shaped profiles at the exterior side edges. The dovetailed profiles, which are made by milling of the exterior side edges, constitute integrated parts of said other panels. These known panels are made of a solid wooden material which is easy to mill. The panels are rather thin, since if solid thick panels were used the furniture would become extremely heavy and unhandy. Furthermore, if panels are removed and if other panels must be introduced, the entire furniture must be disassembled, the new grooves milled out, which may result in exposure of disfiguring grooves not longer useable. Hence, the freedom of assembling and reassembling this known furniture is limited and associated with disadvantages.

Furnitures of thin plates are not trendy anymore and there is an increasing demand for e.g. furnitures, which are more rustic and have a more solid look, i.e. structures of assembled thick panels. However, such thick panels are heavy and unhandy to work with.

In a first aspect according to the present invention is provided a method of the kind mentioned in the opening paragraph, which can be used for making lightweight structures having a solid and rustic look.

In a second aspect according to the present invention is provided a method of the kind mentioned in the opening paragraph, which can be implemented in conventional structural methods for assembling panels.

In a third aspect according to the present invention is provided a method of the kind mentioned in the opening paragraph, which is easy, inexpensive and fast to carry out.

In a fourth aspect according to the present invention is provided an assembled structure manufactured using the method of the kind mentioned in the opening paragraph.

The novel and unique whereby this is achieved according to the present invention is the fact that the method comprises that at least one of the at least one first panel and the at least one second panel is provided as a sandwich panel having a lightweight core.

The lightweight core makes the thick panel easy to manufacture and to handle subsequently. Sandwich panels are less expensive than e.g. solid wood panels and they are very strong too. Hence, the increasing demand for trendy furniture and other structures made by thick panels is easily fulfilled without the furniture or structure become heavy and expensive.

The at least one protruding guide reglet may preferably be provided on a planar surface of the at least one first panel. This is in contrast to the prior art in which guide reglets are provided on the edges. A reglet on a planar surfaces can be arranged any suitable place on the planar surface where assembling of two panels are required without the use of special-purpose tools. The reglet can easily be detachably secured to the at least one first panel using securing means such as screws, nail or super glue, in which case the only tools which is needed for the assembling for example are a drilling machine, a screwdriver or just a hammer. The reglet will be easy to remove without disfiguring the entire planar surface of the at least one first panel.

The guide groove is advantageously provided in a terminal edge of the at least one second panel where it cannot be seen from the planar sides of the at least one second panel. The guide groove can without the use of strong force or tools be slid in over the protruding guide reglet on the at least one first panel in order to join the panels in angular relationship, most often in an angular relationship of about 90°, although other angles may be foreseen within the scope of the present invention.

The sandwich panel can be composed of a number of materials, which are processable and workable. Preferred arrangements and materials for the core of the sandwich panel are a grid structure, a latticework, a plastic foam, an insulating material or a honeycomb structure or combination of these. The simplest grid structure consists of parallel thin wooden lists, which are mounted between the opposing parallel walls of the sandwich panel to provide e.g. a plurality of airspaces or foam containing cells between the walls. The walls may for example be made of thin wood such as e.g. plywood, chipboard, Masonite®, Medium Density Fiberboards (MDF), High Density Fiberboards (HDF) or other composite wood materials. The walls may also be made of composite plastic materials and pure plastic materials, in which case the panels may be extruded in a ready for use design. A further alternative lightweight material for the sandwich element has walls of metal, such as aluminium.

A honeycomb sandwich element is highly preferred for use as panel material. A honeycomb sandwich material consists of layers or exterior walls of high-strength facings bonded to a central core of low-strength strong lightweight cellular structural material, which even may be paper or cardboard, arranged in a honeycomb structural arrangement. FRITZ EGGER GmbH & Co, Holzwerkstoffe, Weiberndorf 20, A-6380 St. Johann in Tirol manufactures the EGGER EUROLIGHT® product, which is an example of a suitable honeycomb composite structural material.

A particular strong connection, having optimum torsional and tensile strengths, between the reglet and the groove can be made if the protruding guide reglet is secured to the at least one first panel, so that the reglet has a protruding section of a width, which is greater than the width of a free opening of the guide groove. This means that the reglet is provided with a section of an exterior width, which increases towards a free end when the reglet is secured to the at least one first panel, so that when the guide groove has a width, which decreases towards a free opening in the terminal edge of the second panel, the obtained connection is able to resist a great load.

In the preferred embodiment the at least one first panel and the at least one second panel are detachably assembled so that a second panel can be removed or just moved to a new location on the first panel if required or desired. The only disfiguring elements in the first panel are a few minor holes, the existences of which do not influence the stability of the panel to the same degree as a long, milled groove. The holes can easily can be filled and painted if desired.

The invention also relates to a structure assembled by the above-described method. Such a structure can for example be a wardrobe or a kitchen cupboard, a room divider, a partition wall, or just an extra shelf to be inserted. However within the scope of the present invention many other structures can be made within the principles of securing a protruding guide reglet or a list to a planar surface, e.g. a partition wall in a wardrobe, and subsequently anchoring the reglet or list in a correspondingly shaped, premade, guide groove in a thin terminal edge of a second panel, e.g. an extra shelve.

The invention will now be explained by way of example with reference to the accompanying drawing in which,
fig. 1 shows a perspective, exploded view of a principle sketch of the components for the panel assembling method,
fig. 2 shows a perspective, fragmentary view of three panels during assembling using the method according to the present invention,
fig. 3 shows the same in assembled state,
fig. 4 shows a front view of a wardrobe assembled using the method according to the present invention,
fig. 5 shows a perspective view of a piece of a honeycomb material provided with a guide groove in accordance with the present invention,
fig. 6 shows a fragment of an alternative arrangement of a guide groove and guide reglet, and
fig. 7 shows a fragment of yet another alternative arrangement of a guide groove and guide reglet

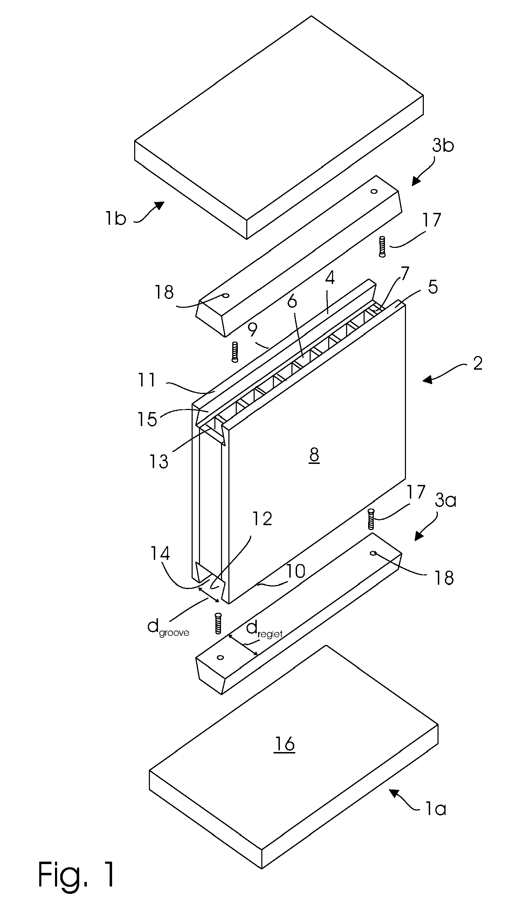

Fig. 1 shows in an exploded view two first panels 1a, 1b, a second panel 2, and two guide reglets 3a,3b. The second panel is composed of two opposing parallel walls 4,5 on both sides of a lightweight core 6. In the case shown the lightweight core consists of a plurality of spacer lists 7. The parallel walls 4,5 define exterior planar surfaces 8,9. The second panel 2 has a first terminal edge 10 facing the reglet 3a and an opposing second terminal edge 11 facing the reglet 3b. Each of the terminal edges 10,11 is provided with a dovetailed guide groove of trapeziformed cros-section, a first guide groove 12 and a second guide groove 13, respectively. The dovetailed grooves 12,13 of trapeziformed cross-section are arranged so that there smallest width d_{groove} is located towards the free openings 14,15 of the guide grooves 12,13.

Both first panels 1 have planar surfaces 16 facing towards respective guide reglet 3a,3b. Also, one first panel 1 faces towards the first guide groove 12 of the first terminal edge 10 of the second panel 2, and the other first panel 1 faces towards the second guide grove 13 of the second terminal edge 11.

The guide reglets 3a,3b have, as mentioned above, a trapeziformed, dovetailed cross-section which corresponds to and fits into the cross-section of the trapeziformed, dovetailed first guide groove 12. Since the greatest cross-sectional width d_{reglet} of the guide reglets is greater than the smallest cross-sectional width d_{groove} at the free openings 14,15 of the first 12 and second guide groove 13, a groove and a reglet cannot just be pressed into engagement but the guide groove must be slid in over the guide reglet. This has the advantage of interlocking of the trapeziformed groove and reglet. The connection is strong and is able to take up a great load and torsional force, but the panels 1,2 can be easily disassembled simply by reversing the sliding action.

The reglet 3 is secured on the first panel 1 with the smallest of the parallel sides of the trapeziformed cros-section in contact with the planar surface 16 by means of screws 17 through holes 18. Any appropriate number of screws can be used, and in the case shown two screws 17 and two holes 18 are indicated.

In the case shown the first panels 1 are both illustrated as solid panels, however within the scope of the present invention the panels 1 could just as well be made as a sandwich element just as the second panel 2, as well as a second panel 2 can be used as a first panel and vice versa to assembled more panels to an assembled structure.

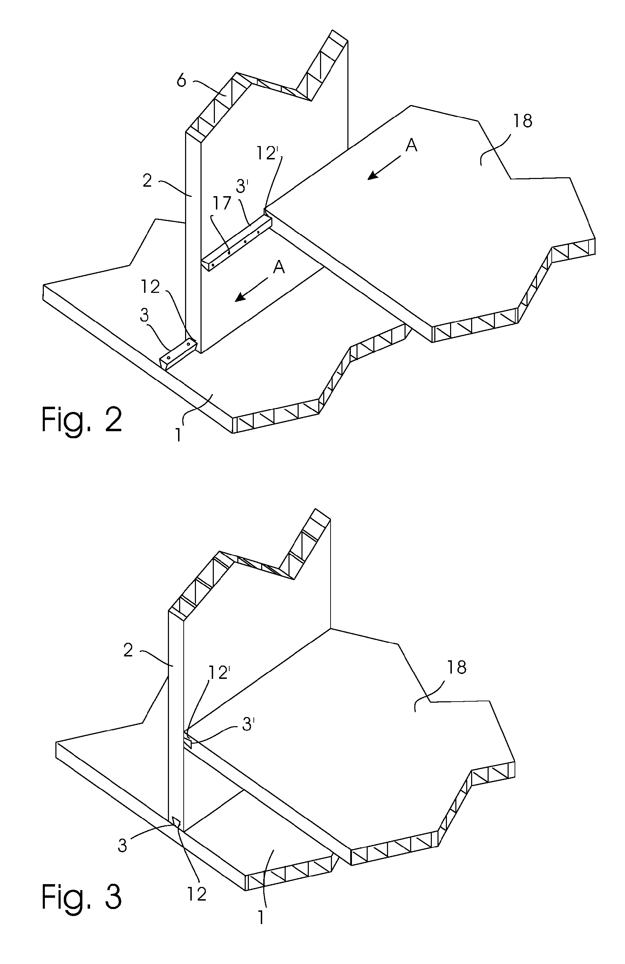

The assembling principles are best understood from the fragmentary, perspective views in fig. 2 and 3.

Fig. 2 shows that the first panel 1 is provided with a guide reglet 3, which is secured to the planar surface 16 by means of screws 17. The guide groove 12 of the second panel 2 is slid in the direction of the arrow A to fully accommodate the reglet 3, as shown in fig. 3. The second panel 2 is provided with a further reglet 3'. This provision enables the second panel 2 to function as a first panel and to be slidingly assembled with a third panel 18, constructed e.g. as the second panel 2, that is provided with a guide groove 12' for slidingly accommodating a guide reglet 3', as shown in fig. 3. In this manner a plurality of panels 1,2,18 can be assembled in an easy manner to any appropriate structure. The panels are assembled perpendicularly to each other, which is the most common angular relationship within the scope of the present invention.

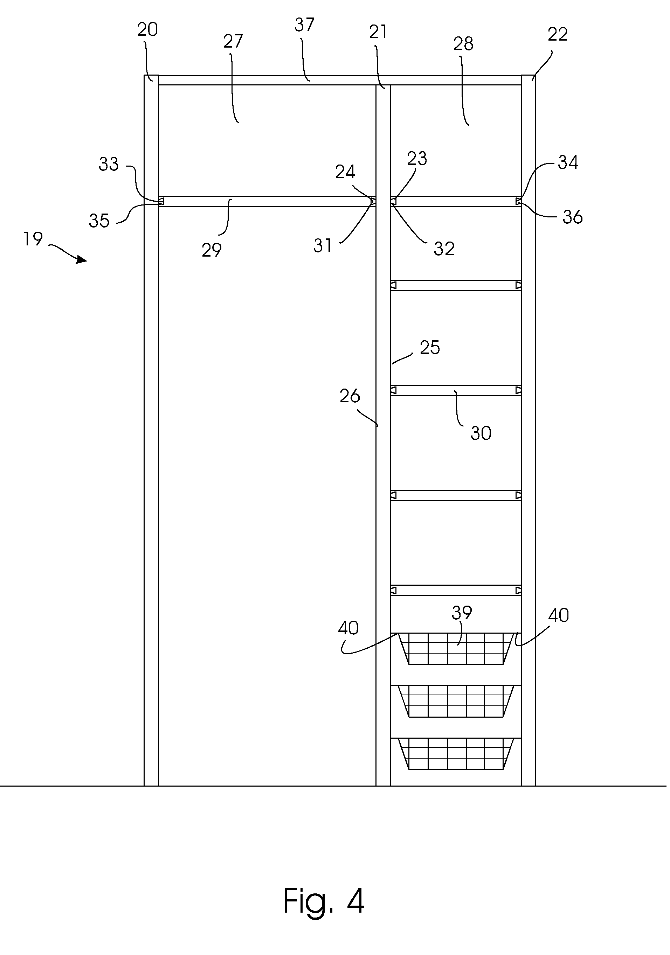

The perpendicular assembling is e.g. used to make partitions walls in a wardrobe 19 as shown in fig. 4. The wardrobe 19 is made of three vertical, parallel first sandwich panels, i.e. two outer panels 20,22 and a central panel 21. The central panel 21, which serves as a first panel within the scope of the present invention, is provided with five spaced apart guide reglets 23 on one planar side 25 and one guide reglet 24 on the opposite planar side 26. The central panel 21 divides the wardrobe in two vertical compartments 27,28, which is further subdivided in smaller compartments by means of shelves 29,30, which serves as second panels within the scope of the present invention, in that the shelves 29,30 are made as sandwich panels 2, which are provided with first guide grooves 31,32 and second guide grooves 33,34. The outer panels 20,22 on each side of the central panel 21 is provided with guide reglets 35,36, respectively, for slidingly accommodating the shelves 29,30 in a horizontal relationship, in which the shelves are arranged perpendicularly to the vertical first panels. As indicated in fig. 4 the wardrobe 19 can be made by combining the method according to the present invention with conventional methods and principles. In the case shown the top panel 37 can be assembled with the vertical panels 20,21,22 using a conventional method, e.g. by nailing the panels to each other. Three wire baskets 38 are hung on conventional shelf brackets 39.

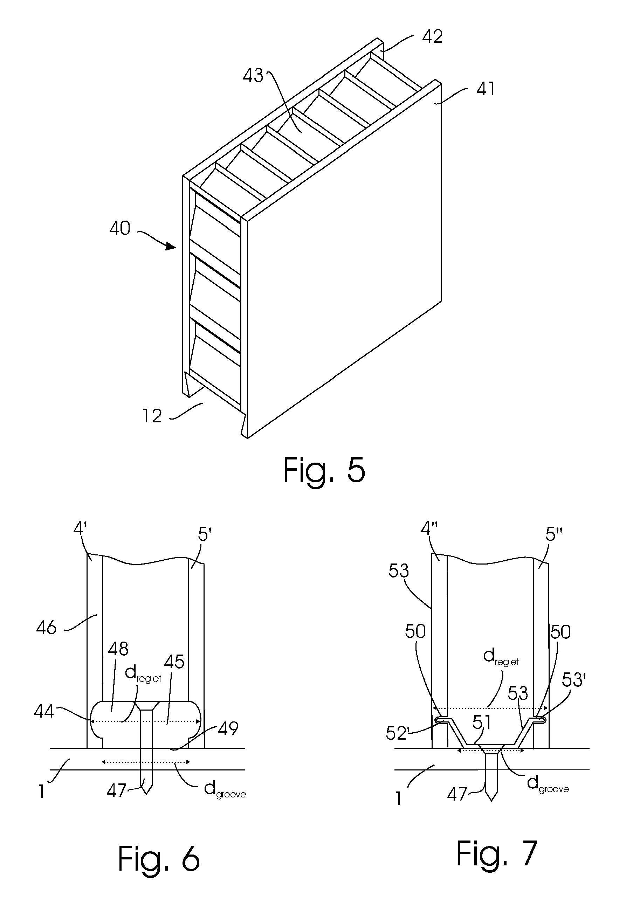

Fig. 5 shows a perspective view of a piece 40 of a preferred material for the sandwich panels used in the method according to the present invention. The piece 40 is a honeycomb composite material, composed of two thin plates 41,42 with a paper core 43 made as honeycomb cells. A guide groove 12 is provided in a similar manner as in the second panel 2, as described for fig. 1.

Fig. 6 shows in perspective a fragment of an alternative embodiment for the arrangement of a guide groove 44 and a guide reglet 45 for the assembling of a first panel 1 and a second panel 46, one or both of which can be made as sandwich panels. The mushroom-shaped guide reglet 45 is secured to the first panel 1 by means of a screw 47, and the guide groove 44, which is made in the interior side of the walls 4',5' of the second panel 46, are designed to be slid over the guide reglet 45 to interlock the two panels 1,46. The mushroom-shaped head 48 of the guide reglet 45 has a width d_{reglet}, which is greater than the width d_{groove} of the free opening 49 of the guide groove 44. Hence, interlocking of the panels 1,46 perpendicular to each other is easy to accomplish.

Fig. 7 shows in perspective a fragment of another alternative embodiment for the arrangement of a guide groove 50 and a guide reglet 51. The guide reglet 51 is provided as a U-profile having diverging legs 52,53, terminating in a folded flap 52',53', respectively, which are accommodated in the guide groove 50. Said guide groove is simply a slot 50, which is recessed in the interior sides of the walls 4,5 of the second panel 53.

The method according to the present invention is not limited to the above shown designs of grooves and reglets, and other designs of guide reglets protruding from any planar surface and guide grooves in sandwich elements are possible within the scope of the present invention. All panels may be made as sandwich elements or some of the panels, and the method can be implemented in any structure, which require firmly interlocking of two panels in an angular relationship.

In case the angular relationship is not perpendicular, the guide reglet is just modified to have a greater height in one of the sides so that the contact angle between the first panel and the guide reglet is e.g. acute or obtuse. The extent of the walls of the second panel may be adjusted accordingly.

## Claims

1. A method of assembling at least one first panel (1;20;21;22) and at least one second panel (2;29;30;40;46;53) in an angular relationship, comprising
- providing at least one protruding guide reglet (3; 23;24;33;34;45;51) on the at least one first panel (1;20;21;22),
- providing a guide groove (12;13;31;32;35;36;44;50) in the at least one second panel (2;29;30;40;46;53), said guide groove (12;13;31;32;35;36;44;50) is designed to firmly accommodate the at least one protruding guide reglet (3; 23;24;33;34;45;51), and
- slidingly engaging the guide groove (12;13;31;32;35;36;44;50) and the guide reglet (3; 23;24;33;34;45;51) to provide a strong joint of the at least one first panel (1;20;21;22) and the at least one second panel (2;29;30;40;46;53),
**characterized in that** the method comprises that the
- at least one of the at least one first panel (1;20;21;22) and the at least one second panel (2;29;30;40;46;53)) is provided as a sandwich panel having a lightweight core (6).

2. A method according to claim 1, **characterized in that** the at least one protruding guide reglet (3; 23;24;33;34;45;51) is provided on a planar surface of the at least first panel (1;20;21;22).

3. A method according to any of the claims 1 or 2, **characterized in that** the at least one protruding guide reglet (3;23;24;33;34;45;51) is detachably secured to a planar surface of the at least one first panel (1;20;21;22).

4. A method according to any of the claim 1, 2 or 3 **characterized in that** the guide groove (12;13;31;32;35;36;44;50) is provided in a terminal edge (10;11) of the at least second panel (2;29;30;40;46;53).

5. A method according to any of the preceding claims 1 - 4, **characterized in that** the core (6) of the sandwich panel (1;2;40;46;53) is a grid structure, a latticework, a plastic foam, an insulating material or a honeycomb structure or combinations of these.

6. A method according to any of the preceding claims 1 - 5, **characterized in that** when the protruding guide reglet (3;23;24;33;34;45;51) is secured to the at least one first panel (1;20;21;22), the reglet (3;23;24;33;34;45;51) has a protruding section of a width d_{reglet}, which is greater than the width d_{groove} of a free opening of the guide groove (12;13;31;32;35;36;44;50).

7. A method according to any of the preceding claims 1 - 6, **characterized in that** the at least one first panel (1;20;21;22) and the at least one second panel (2;29;30;40;46;53) is detachably assembled.

8. A structure assembled by the method according to any of the proceeding claims 1 - 7.

9. A structure according to claim 8, **characterized in that** the structure is a wardrobe (19) or a kitchen cupboard, a room divider, a partition wall (21), or a shelf (29;30).
